# FASCICULE DE BREVET EUROPEEN

(11) **EP 3 221 960 B1**
(45) Date de publication et mention de la délivrance du brevet: **30.12.2020**
(21) Numéro de dépôt: 15798089.7
(22) Date de dépôt: 20.11.2015
(51) Int. Cl.: H02P 27/08

(54) **ENSEMBLE MECATRONIQUE PILOTE PAR UN SIGNAL DE COUPLE ET DIRECTION DISTINCT DU SIGNAL DE PUISSANCE**
DURCH EIN DREHMOMENT- UND RICHTUNGSSIGNAL GETRENNT VOM LEISTUNGSSIGNAL GESTEUERTE MECHATRONISCHE ANORDNUNG
MECHATRONIC ASSEMBLY CONTROLLED BY A TORQUE AND DIRECTION SIGNAL SEPARATE FROM THE POWER SIGNAL

(30) Priorité: 20.11.2014 FR 1461241
(43) Date de publication de la demande: 27.09.2017
(73) Titulaire: MMT SA, 6304 Zug (CH)
(72) Inventeur: ANDRIEUX, Gaël, 2533 Evilard (CH); RONDOT, Eric, 25410 Berthelange (FR)
(74) Mandataire: IP Trust
(86) Numéro de dépôt international: PCT/EP2015/077259
(87) Numéro de publication internationale: WO 2016/079315

(56) Documents cités:
- EP-A1- 2 528 227
- WO-A2-2014/091152
- US-A1- 2012 068 642
- US-A1- 2012 169 263
- US-A1- 2013 069 580

## Description

### DOMAINE TECHNIQUE DE L'INVENTION

La présente invention concerne le domaine des ensembles mécatroniques commandés en modulation de largeur d'impulsion, par exemple pour des applications automobiles telle que par exemple le déphasage de l'arbre à cames.

### ETAT DE LA TECHNIQUE ANTERIEURE

On connaît, dans l'état de la technique, différentes solutions, et notamment celle décrite dans la demande de brevet WO2014/091152 décrivant un ensemble mécatronique pour le positionnement d'un organe comprenant une unité de commande et un actionneur. L'unité de commande (ECU) comprend un algorithme d'asservissement et un pont de puissance. Il pilote le pont de puissance, délivrant un signal électrique bifilaire composé d'un signal de couple et d'un signal de direction. L'actionneur comprend un moteur électrique sans balai polyphasé à N phases, des sondes de détection binaires de la position du rotor dudit moteur, des interrupteurs de puissance aptes à alimenter les N phases du moteur à partir du signal électrique bifilaire. L'état des interrupteurs de puissance est commandé directement par un signal issu des sondes de détection.

Dans ce document, le signal bifilaire comprend l'information de couple, l'information de direction et véhicule aussi la puissance (tension/courant) utilisée par les phases du moteur.

La solution proposée dans l'art antérieur est particulièrement efficace pour des moteurs électriques de faible puissance.

Toutefois, pour des moteurs de plus forte puissance, l'alimentation directe du pont de puissance par les signaux provenant d'un ECU implique des pertes de puissance par effet Joule. Par ailleurs, les ECU ne sont généralement pas conçus pour la gestion de fortes puissances, ce qui peut conduire à un manque de fiabilité et un coût matériel non négligeable.

**On** connaît aussi la demande de brevet américaine US2012/068642 décrit un dispositif de commande à phase unique pour un moteur à courant continu sans balai, par modulation de largeur d'impulsion (PWM) et une unité logique de commutation pour commander la vitesse et la rotation d'un moteur monophasé.

La structure d'un moteur monophasé prévoit un nombre de pôles identiques au stator et au rotor, et un mode de commande propre à une telle architecture iso-polaire. L'enseignement d'un tel dispositif de commande n'est pas transposable à un moteur polyphasé. En effet, un moteur polyphasé comprend un stator constitué de bobines d'excitation qui sont généralement au nombre de 3 ou de 6 (il s'agit d'un exemple indicatif). Celles-ci sont le plus souvent connectées en étoile, mais elles peuvent également être connectées en triangle. Le rotor est constitué d'aimants permanents comportant 2 à 8 pôles avec une alternance des pôles Nord et Sud.

La plupart des moteurs BLDC comprennent également un ensemble de trois capteurs à effet Hall qui, positionné à 60° ou à 120° l'un de l'autre, permettent de connaître la position du rotor. La connaissance de la position du rotor permet à un circuit électronique auxiliaire d'effectuer les commutations de l'alimentation. Le contrôle d'un moteur polyphasé se fait avec une séquence de commutation qui est fondamentalement différente du contrôle d'un moteur monophasé, et il n'est donc pas évident, pour un homme du métier, de combiner des enseignements portant sur un moteur et une commande monophasée, pour concevoir un moteur et un circuit de commande polyphasée.

L'objet de la présente invention se limitera aux moteurs polyphasés dont N est supérieure à 1. Pour les moteurs où N=1 (moteur monophasé) l'homme du métier admet que la séquence de démarrage et les moyens d'imposer la direction de rotation, n'est pas trivial et généralement recourt à l'utilisation d'un circuit électronique de pilotage du moteur complexe et intelligent (ex : un microcontrôleur).

### EXPOSE DE L'INVENTION

L'objet de l'invention ici développée est de:
- conserver la simplicité du circuit de pilotage décrit dans la demande WO2014/091152,
- piloter un moteur BLDC de forte puissance,
- être compatible avec une ECU de petite ou moyenne puissance voir même sans sortie de puissance,
- simplifier et réduire les coûts de l'ECU,
- proposer une solution de pilotage d'un moteur à courant continu sans balais (BLDC) exempte d'une électronique complexe et/ou nécessitant l'utilisation d'un microcontrôleur,
- minimiser le nombre de points de connexion entre le système mécatronique et l'ECU.

Le champ d'application visé par l'invention concerne les moteurs sans balai (BLDC) à forte puissance, par conséquent, sont exposées ici les solutions de moteurs triphasés à commande bipolaire. Bien que faisable et également couvert par la présente invention, le cas des commandes unipolaires à une ou deux bobines, définies dans la demande WO2014/091152, est moins favorable.

Plus particulièrement, l'invention se réfère à un ensemble mécatronique pour l'entrainement d'un organe destiné à être relié d'une part à une source électrique continue de puissance et d'autre part à une unité de commande ECU comprenant un calculateur pour l'exécution d'un algorithme d'asservissement délivrant une information de direction et de couple, ledit ensemble comprenant un actionneur formé par un moteur électrique sans balai polyphasé à N phases, des sondes de détection binaires de la position du rotor dudit moteur, un circuit électronique comprenant un pont de puissance pour l'alimentation des N phases du moteur, caractérisé en ce que il comporte en outre un circuit électronique de pilotage embarqué dont l'entrée reçoit ladite information de direction et de couple de l'ECU et dont la sortie commande ledit pont de puissance modulant directement le courant de la source électrique continue de puissance appliquée à chacune desdites phases du moteur et en ce que l'information de couple et de direction fournie par l'ECU est distincte du signal de puissance délivré seulement par la source de puissance.

L'information de couple est une information qui permet d'ajuster au final, en sortie du pont de puissance, position ou vitesse du rotor du moteur en charge.

Le domaine d'application privilégié ici est automobile, l'ensemble mécatronique étant par exemple destiné à un déphaseur d'arbre à cames. Le moteur de l'ensemble mécatronique selon l'invention permet d'ajuster la phase de rotation de l'arbre à cames relativement à la rotation de l'arbre moteur. Dans cet exemple, l'ensemble mécatronique peut donc être placé à proximité de l'organe à piloter, relié à la batterie de l'automobile -la source de puissance-, l'ECU envoyant uniquement les informations de direction et de niveau de couple demandé sans que cette ECU ne délivre de signal de puissance. On peut envisager d'autres applications où l'ensemble mécatronique est destiné à déplacer une vanne de recirculation des gaz brulés (EGR), ou bien encore permet le réglage d'un turbo à géométrie variable.

Particulièrement, l'ensemble mécatronique comporte des moyens pour extraire un premier signal de direction et un second signal de couple à partir de ladite information de direction et de couple délivrée par l'ECU.

Dans un mode privilégié, l'information de direction et de couple délivrée par l'ECU est sous forme d'un signal de type « modulation de largeur d'impulsion » (MLI ou PWM dans la suite du texte).

Dans un mode de réalisation particulier, ledit moyen d'extraction dudit premier signal de direction et dudit second signal de couple délivre un premier état de direction lorsque la largeur d'impulsion sur une période est inférieure à une valeur-seuil (50%), et un deuxième état de direction lorsque la largeur d'impulsion sur une période est supérieure ou égale à ladite valeur-seuil.

Dans ce cas, ledit moyen d'extraction dudit premier signal de direction et dudit second signal de couple délivre un signal de couple fonction de l'écart en valeur absolue entre une valeur de référence et le rapport cyclique de ladite information délivrée par l'ECU.

Préférentiellement, ladite valeur-seuil est égale à ladite valeur de référence et égale à 0,5.

Dans un autre mode de réalisation, l'ensemble mécatronique comporte des moyens pour extraire un premier signal de direction et un second signal de couple à partir de ladite information de direction et de couple délivrée par l'ECU sous forme d'une première information de direction et d'une seconde information de couple, lesdites informations étant appliquées à un ensemble de portes logiques constituant ledit moyen d'extraction.

Dans une version alternative, l'ensemble mécatronique comporte des moyens pour extraire un premier signal de direction et un second signal de couple à partir de ladite information de direction et de couple délivrée par l'ECU sous forme d'un signal issu d'un pont H de puissance, lesdites informations étant appliquées à un ensemble de portes logiques constituant ledit moyen d'extraction.

Dans une optique de gestion des erreurs, l'ensemble mécatronique comporte des moyens d'information bidirectionnelle signalant un défaut dudit ensemble mécatronique à l'ECU sous forme d'une information forçant le signal de type « modulation de largeur d'impulsion » à zéro.

Dans ce cas, il peut être envisagé que les moyens d'information bidirectionnelle permettent d'acquitter ledit défaut après prise en compte par l'ECU en envoyant une information de retour en fonctionnement normal à l'ensemble mécatronique.

### BREVE DESCRIPTION DES FIGURES

D'autres caractéristiques et avantages de l'invention ressortiront à la lecture qui suit d'exemples de réalisation détaillés, en référence aux figures annexées qui représentent respectivement :
- la figure 1, le schéma bloc général de l'ensemble de commande d'un ensemble mécatronique selon l'invention,
- la figure 2, un premier mode de réalisation de l'invention où les signaux de commande de couple et de direction sont sous la forme d'un seul signal de type MLI (aussi appelé PWM),
- la figure 3, une image du couple appliqué au moteur en fonction du rapport cyclique dans le cas du premier mode de réalisation,
- la figure 4, le lien entre le rapport cyclique et le courant appliqué aux phases du moteur dans le cas du premier mode de réalisation,
- la figure 5, l'utilisation du mode dit « rectification synchrone »,
- les figures 6 et 7, les schémas blocs électroniques permettant l'utilisation d'un retour d'information sur erreur,
- la figure 8, un schéma explicatif des signaux pertinents associés à l'utilisation des blocs décrits en figures 6 et 7,
- la figure 9a, un deuxième mode de réalisation de l'invention où les signaux de commande de couple et de direction venant d'un pont de puissance H de l'ECU et traités par un ensemble de portes logiques,
- la figure 9b, le résultat du traitement réalisé par les portes logiques utilisées en figure 9a,
- la figure 10, un troisième mode de réalisation de l'invention où les signaux de commande de couple et de direction sont sous la forme de deux signaux distincts de type MLI et TOR (tout ou rien) et entrant directement sur le circuit de pilotage.
- la figure 11, un quatrième mode de réalisation permettant l'adaptation de l'ensemble mécatronique à des signaux de couple et de direction venant de l'ECU aussi bien sous la forme d'un signal issu d'un pont de puissance que de signaux de type MLI et TOR.
- la figure 12, le schéma de principe d'un dispositif d'auto-commutation d'un moteur sans balai avec un mode de pilotage dit « fast decay » + redressement synchrone (« synchronous rectification »).
- la figure 13, la table de vérité de la logique d'auto-commutation en mode « fast decay ».
- la figure 14, la table de vérité de la commande des transistors du pont triphasé.
- la figure 15, détail d'une partie du schéma de la figure 12 décrivant le système de protection de l'anti conduction simultanée (« cross conduction »).
- la figure 16, chronogramme des signaux de commande des transistors du pont triphasé.
- la figure 17, exemple de réalisation d'un élément de protection décrit à la figure 15.
- la figure 18, un grossissement des signaux de la figure 16 montrant l'effet du circuit de la figure 17.
- la figure 19, évolution du courant moteur pour un pas particulier et fonction du rapport cyclique du signal MLI.
- la figure 20, génération de signaux de vitesse et de direction à l'aide des trois sondes de Hall du moteur.
- la figure 21, chronogramme des signaux de vitesse et de direction.

### DESCRIPTION DETAILLEE D'UN MODE DE REALISATION

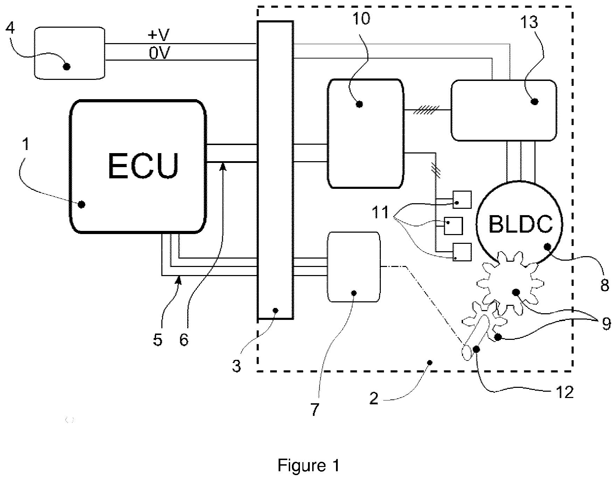

La figure 1 décrit schématiquement un ensemble mécatronique selon l'invention ainsi que les éléments nécessaires à sa commande et alimentation. On y retrouve une unité de contrôle électronique -ECU- (1), par exemple un contrôleur automobile, l'ensemble mécatronique (2) selon l'invention, au moins un connecteur (3), une source continue de puissance électrique (4), par exemple une batterie automobile, des sondes de Hall (11) - généralement au nombre de trois lorsque associées à un moteur triphasé - détectant la rotation du moteur sans balai (8) et destinées à permettre l'auto-commutation des phases du moteurs, un capteur de position angulaire (7) renseignant sur la position absolue d'un arbre de sortie (12) commandé par le moteur (8) au travers d'un système de réduction mécanique de mouvement (9). Le capteur de position (7) renvoie une information de position (5) à l'ECU (1). Cet ECU (1) délivre une information de couple et de position (6) à un circuit électronique de pilotage ou « driver » (10) embarqué. Le signal de puissance venant de la source de puissance (4) est directement appliqué au pont de puissance (13) contenant généralement 6 transistors pour l'alimentation des 3 phases du moteur (8) BLDC.

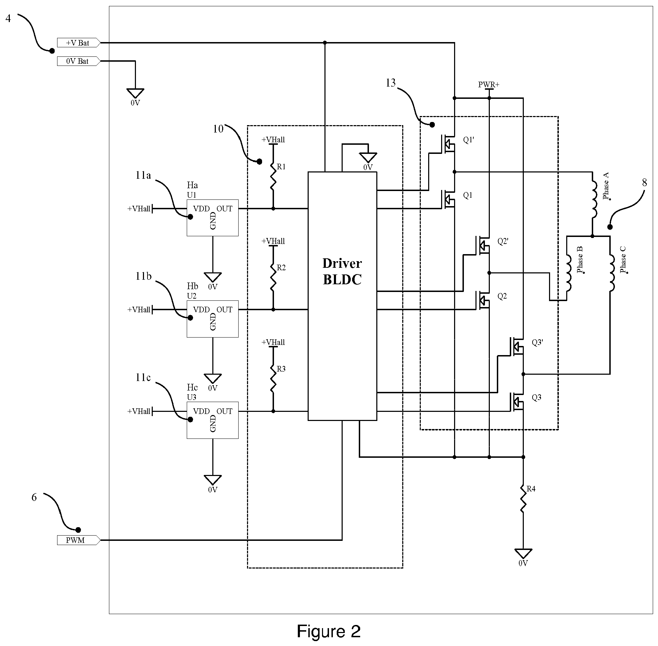

La figure 2 décrit un premier mode de réalisation préféré où le signal de direction et de couple est donné uniquement par un seul signal de type MLI qui entre directement le circuit de pilotage. Le signal provenant de la source de puissance entre le pont de puissance directement pour alimenter les phases du moteur selon l'ordre de commande issu du circuit de pilotage. Dans cette illustration, le signal venant de la source de puissance entre aussi le circuit de pilotage mais est uniquement destiné à alimenter, au besoin, le circuit au travers d'une régulateur de tension, typiquement un régulateur 5 Volts, ce régulateur pouvant alors alimenter aussi les sondes de Hall (11a, 11b, 11c) servant à la détection de la position du rotor du moteur. Les signaux venant de ces sondes de Hall sont entrées dans le circuit de pilotage.

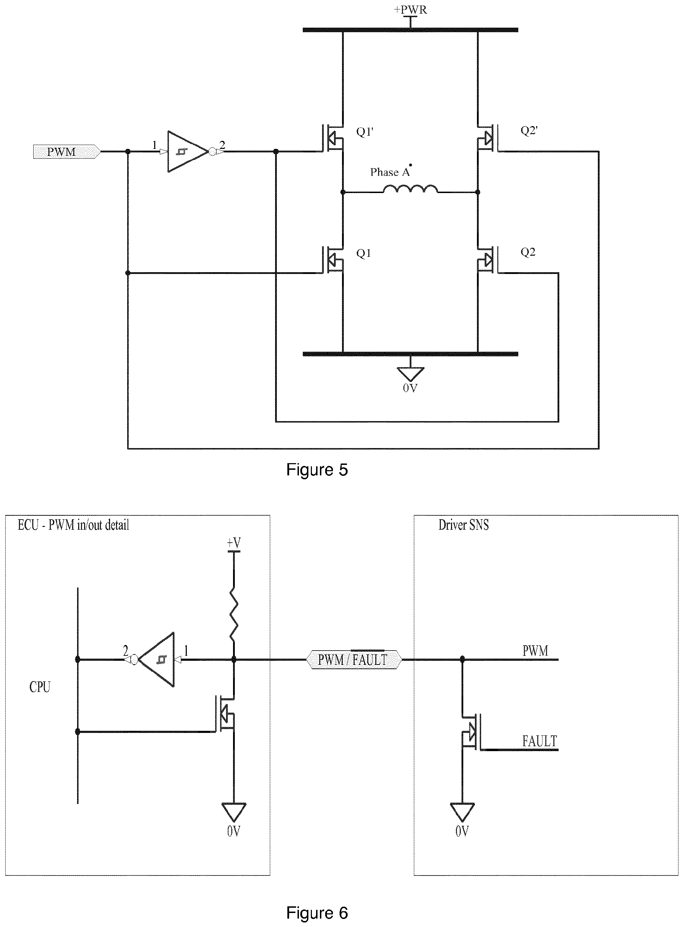

La figure 5 présente la possibilité de configurer le fonctionnement du circuit de pilotage avec une recirculation des courants dans le mode dit à décroissance rapide (Fast Decay) et également le mode rectification synchrone. Ce mode rectification synchrone permet le pilotage de façon complémentaire des deux transistors d'une même branche, permettant une circulation/recirculation du courant de/vers la source de puissance (batterie).

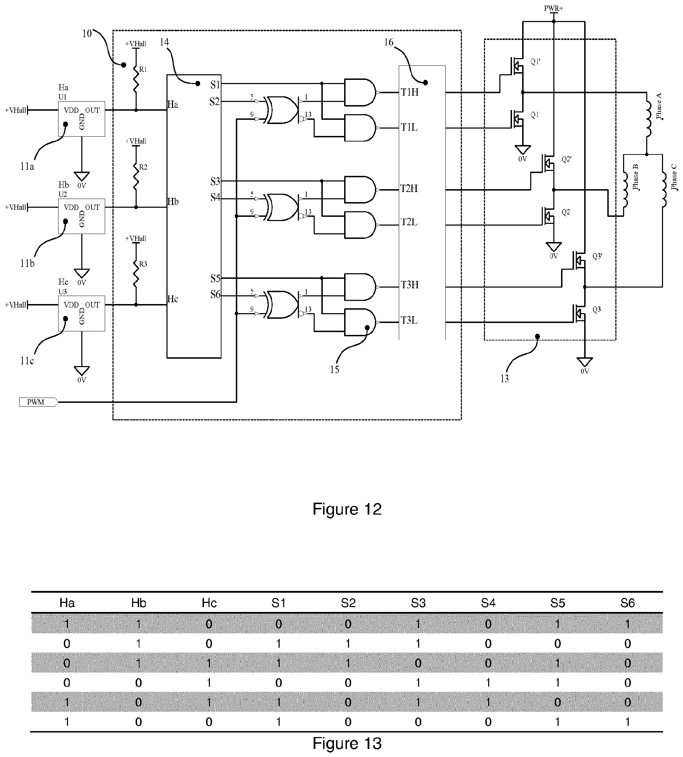

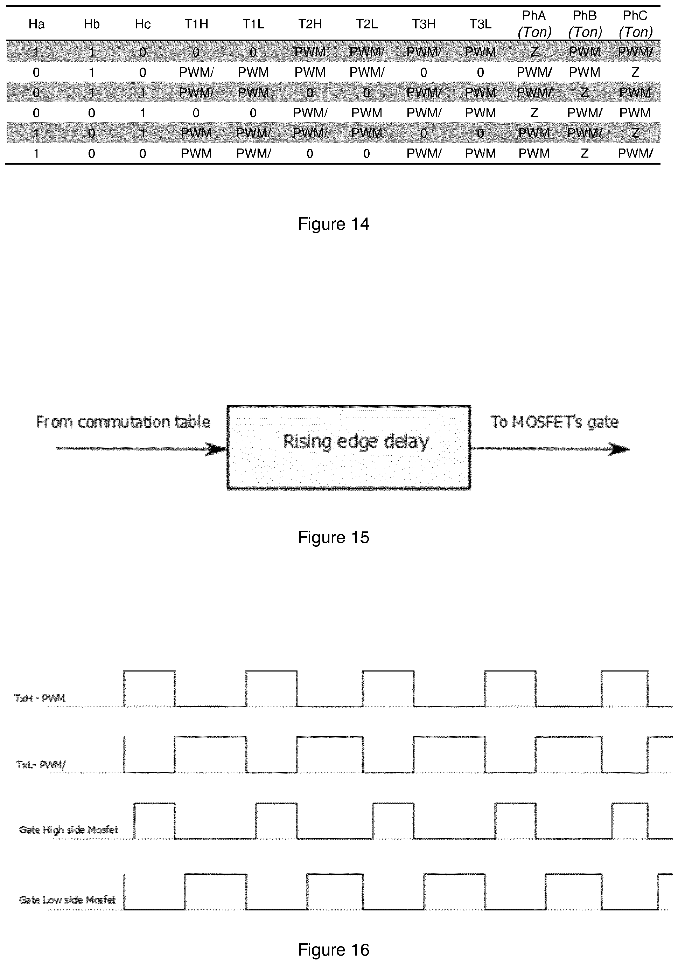

La figure 12 reprend en détail le principe exposé à la figure 2 et à la figure 5 en introduisant un mode particulier pour le mode de hachage appliqué aux transistors du pont triphasé. Ce mode de hachage dit « fast decay » + « synchronous rectification » permet une commande de rotation bidirectionnelle du moteur régit par un unique signal MLI de commande. Les trois sondes de Hall intégrées au moteur (11a, 11b, 11c) renseignent la position du rotor à une logique de commutation (14) définissant l'état de commande du pont de puissance (13) conformément à la table de vérité détaillée en figure 13. La combinaison logique de ces derniers signaux avec le signal MLI de commande pilote la commande des transistors conformément à la table de vérité décrite en figure 14.

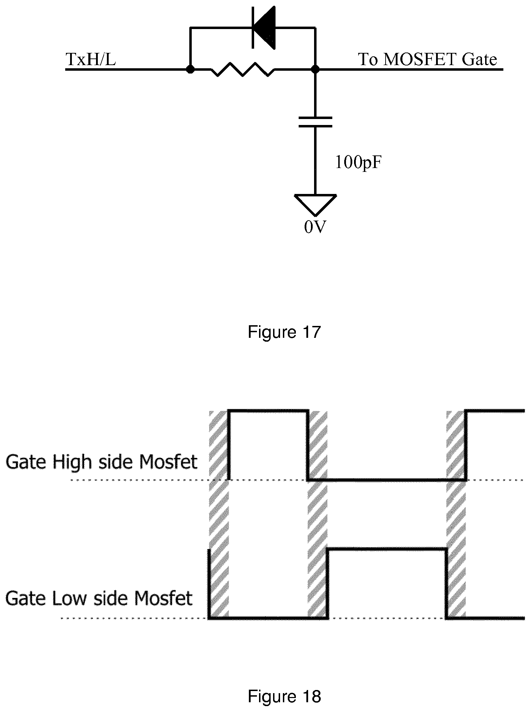

Un circuit de pilotage (14) des gates des transistors du pont de puissance (13), outre la fonction d'interfaçage des niveaux de tension, intègre la fonctionnalité dite « deadtime » protégeant les transistors contre une mise en conduction simultanée des deux transistors d'une même branche du pont triphasé. Ce circuit de protection décrit en figure 15, peut se résumer à un retard du front montant du signal MLI conditionné avec les états de commutation. Un exemple de réalisation pratique est montré en figure 17, les chronogrammes des signaux de pilotage des transistors du pont de puissance (13) sont montrés en figure 16, et un grossissement en figure 18 met en évidence les temps d'attente (« deadtime ») entre les moments de commutation des transistors haut et bas d'un même branche du pont de puissance (13).

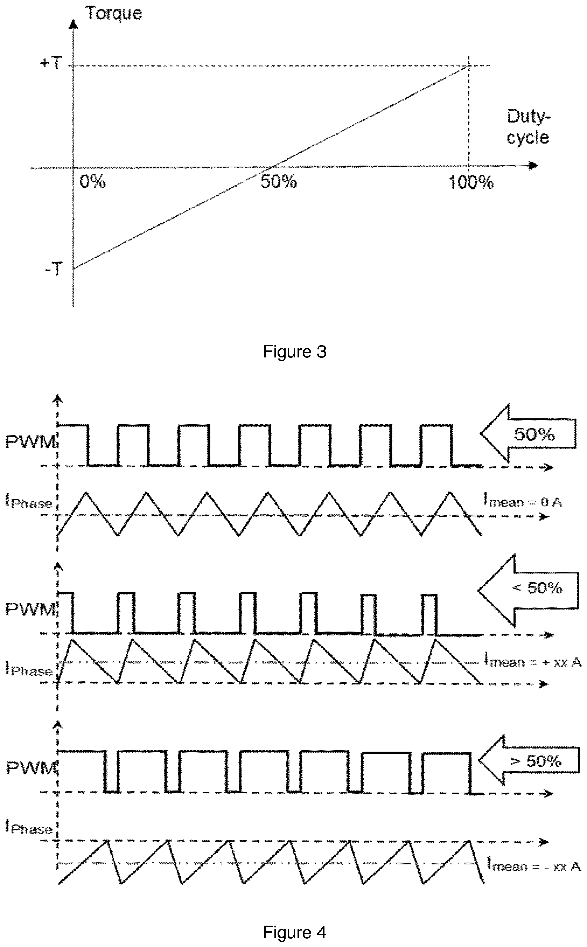

Les figures 3 et 4 illustrent l'utilisation qui est faite du signal MLI et explique le principe général de fonctionnement. De manière proportionnelle, le rapport cyclique permet de déterminer le niveau de couple appliqué aux phases et donc, en fonction du signe de la valeur moyenne du courant résultant, la direction de rotation qui sera donnée au moteur. A 50% de rapport cyclique, le courant moyen est nul dans les phases, maintenant le moteur en un état de repos. A plus de 50% de rapport cyclique, le courant moyen obtenu est positif, permettant la rotation dans un sens du moteur et selon un niveau de couple proportionnel à la valeur moyenne de courant. A moins de 50% de rapport cyclique, le courant moyen obtenu est négatif, permettant la rotation dans un autre sens du moteur et selon un niveau de couple proportionnel à la valeur moyenne de courant.

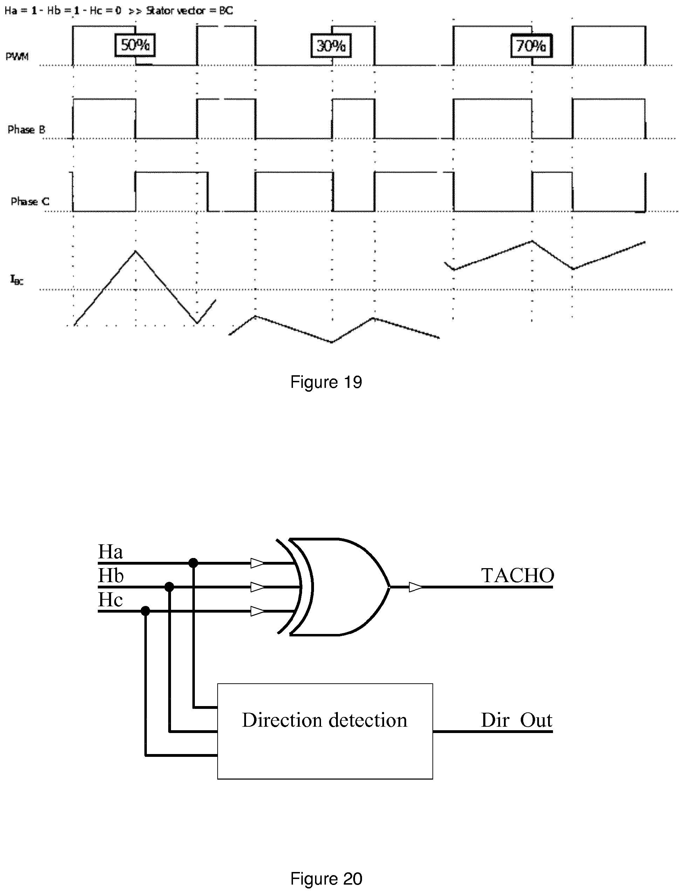

La figure 19 reprend les précédentes explications en détaillant le cas particulier d'un pas moteur où l'état des sondes Ha, Hb, Hc est respectivement 1, 1, 0 et pour lequel la logique de commutation (14 + 15) applique le signal MLI à la commande du transistor 'Haut' et le signal MLI complémenté à la commande du transistor 'Bas' du pont de puissance (13). Pour un rapport cyclique de 50%, le temps identique pour V_{BC}= +V_{bat} et V_{BC}= -V_{bat} conduit à une valeur moyenne nulle du courant de phase. Pour un rapport cyclique de 30%, le temps pour V_{BC}= +V_{bat} est inférieur au temps pour V_{BC}= -V_{bat} ce qui conduit à une valeur moyenne négative du courant de phase. Pour un rapport cyclique de 70%, le temps pour V_{BC}= +V_{bat} est supérieur au temps pour V_{BC}= -V_{bat} ce qui conduit à une valeur moyenne positive du courant de phase.

Le principe de pilotage d'un moteur sans balai connu des personnes du métier, est d'appliquer un vecteur tension en moyenne en avance de 90° électrique sur le vecteur rotor. Par exemple pour un vecteur rotor donné par l'état des sondes Hall A=1, Hall B=1, Hall C=0, le vecteur tension statorique BC sera appliqué pour une rotation dans une direction donnée. L'application du vecteur CB sera appliquée pour une rotation inverse. De la démonstration faite au paragraphe [0031] il est évident que le rapport cyclique du signal MLI définira le sens de rotation du moteur.

Le signal MLI est appliqué aux transistors du pont de puissance (13), et ainsi définit de par son rapport cyclique la tension moyenne appliquée aux bornes du moteur sans balai (8). En plus de contrôler la direction de la rotation du moteur, le signal MLI contrôle le couple du moteur comme décrit en figure 3.

Dans la mesure où le circuit de pilotage fourni un signal de défaut, il est possible de remonter cette information à l'ECU par le biais d'une liaison bidirectionnelle véhiculant à la fois le signal MLI de commande et également le signal de défaut. Le schéma figure 6 illustre cela.

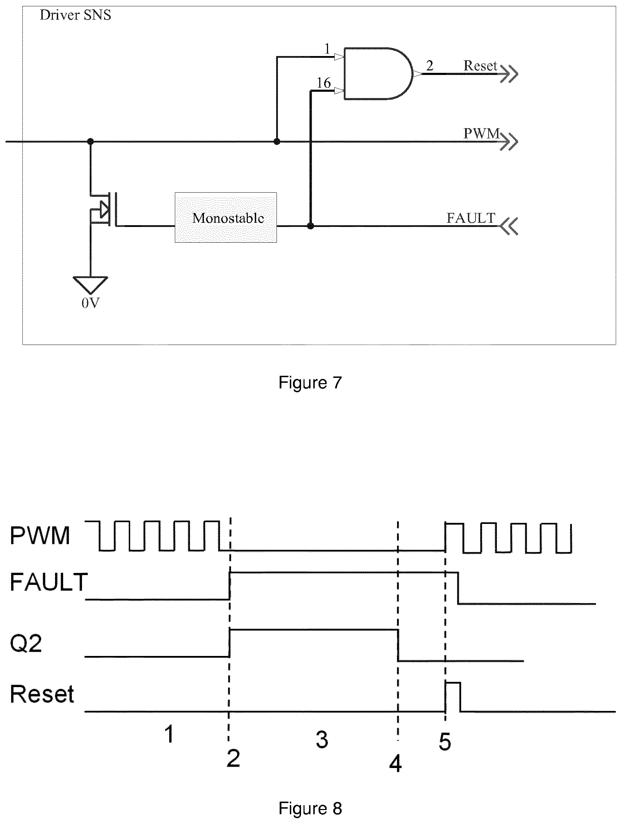

Dans le cas où le circuit d'auto-commutation du circuit de pilotage requerrait un acquittement du signal de défaut, il peut être envisagé de compléter le schéma avec le circuit donné pour exemple en figure 7, bien que d'autres solutions sur ce même principe peuvent être envisagées.

La figure 8 explique alors le fonctionnement de ce mode permettant le retour d'information sur erreur :

En phase 1, aucun défaut n'est constaté, le fonctionnement est normal, le circuit de pilotage reçoit le signal MLI venant de l'ECU.

**A** l'instant 2, le circuit de pilotage envoie une information d'erreur déclenchant la bascule monostable qui ferme le transistor Q2. Le signal MLI est alors forcé à zéro.

Pendant la phase 3, le signal MLI est maintenu à zéro par l'ECU qui a détecté le défaut.

A l'instant 4, la bascule monostable retrouve son état d'origine et ouvre le transistor Q2. Entre temps l'ECU peut éventuellement prolonger la phase 3 en forçant sa sortie MLI à zéro.

A l'instant 5, l'ECU libère le forçage et renvoie son signal MLI. La porte ET passe au niveau logique haut l'entrée d'acquittement d'erreur du circuit d'auto-commutation et permet ainsi le retour du signal de défaut à zéro. Le fonctionnement normal reprend.

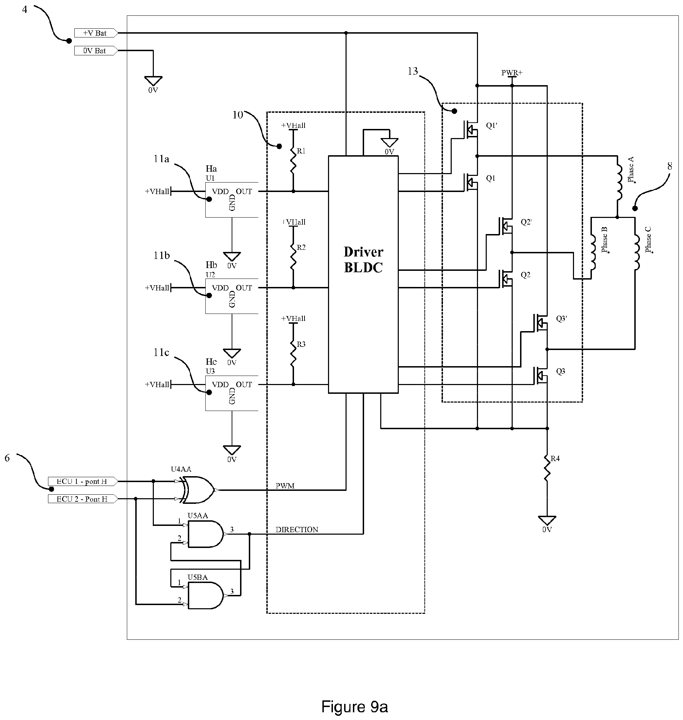

Comme présenté à la figure 9a, un deuxième mode de réalisation de l'invention peut être envisagé où les informations de direction et de couple sont données par un signal bifilaire issu d'un pont de puissance, type pont H. En fonction du potentiel de chaque fil, direction et niveau de couple peuvent être donnés. Ces signaux nécessitent une mise en forme pour le circuit de pilotage et il est donc prévu, en amont du circuit de pilotage, d'utiliser des portes logiques pour formater ces signaux.

L'ECU fournit sur 2 fils les informations de direction et la commande de couple, ces informations proviennent d'un pont H initialement dédié à la commande et alimentation d'un moteur DC. Dans ce cas de figure, le programme de l'ECU restera identique à celui permettant le contrôle d'un moteur DC.

Le système nécessite 4 points de connexion : 2 pour l'alimentation de puissance en provenance de la batterie, 2 pour la commande couple/direction et aussi les 3 points de connexion dédiés au capteur de position absolu (7) également présent sur un système DC.

La figure 9a reste simplifiée pour des besoins de description du principe. Le 0V de référence est connecté directement à la batterie et les courants de la puissance circulant par ce câble, le 0V de l'ECU pourra être quelque peu différent. Il faudra donc veiller à ce que les niveaux de détection sur les signaux issus de l'ECU soient suffisamment tolérants à ces offsets variables sur le potentiel de référence.

Une solution consiste à interfacer les 2 fils en provenance du pont H avec un circuit différentiel.

Nous ne reviendrons pas sur l'utilisation de 1 ou 2 bascules RS utilisées pour la discrimination du sens de rotation issu du signal fourni par le pont H de l'ECU. Cela est notamment décrit dans la demande FR2999825.

Le signal MLI permettant le hachage des transistors de puissance sera confié à une fonction OU EXCLUSIF extrayant l'information du signal fourni par le pont H de l'ECU.

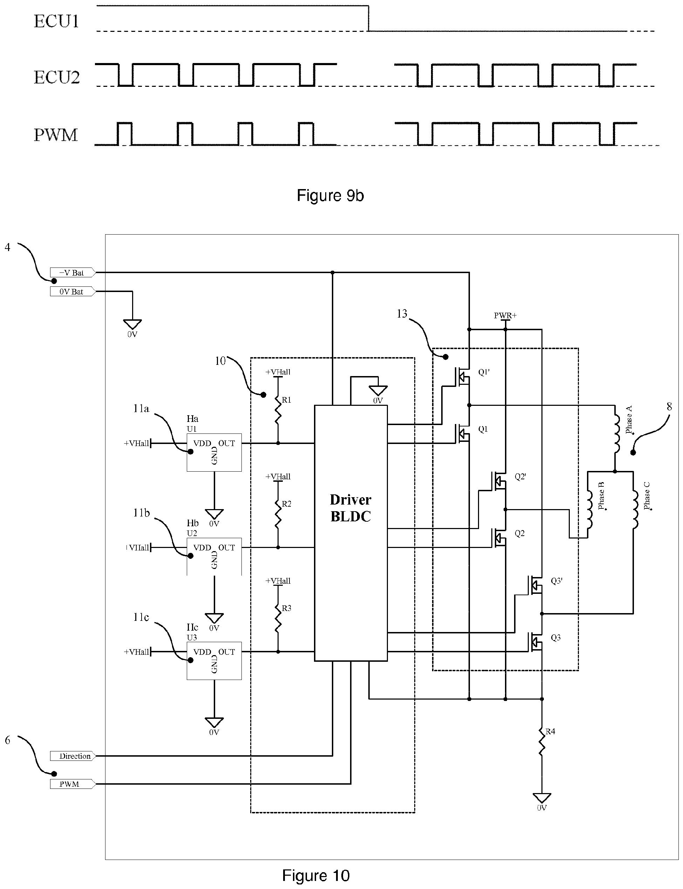

Comme visible en figure 9b, on peut observer que le OU Exclusif permet d'obtenir un signal logique à 1 lorsque les sorties du pont H sont différentes : cas où la charge est alimentée. Ce OU EXCLUSIF peut être soit une porte logique ou alors une solution discrète construite autour de transistors et diodes.

Le cas où l'ECU donne directement les deux informations de direction et de couple est donné en figure 10. L'utilisation est ici directe puisque l'ECU fournie directement les signaux MLI et direction attendus par le driver BLDC. Pas besoin de discrimination ou de traitement spécifique autre que la protection, filtrage et adaptation de niveau traditionnel dans les interfaces automobiles.

Une solution puriste se voudrait d'ajouter un 5ème fil permettant d'avoir une référence 0V commune entre l'ECU et l'électronique de pilotage. Néanmoins en tenant compte des remarques précédentes, ce fil peut être facultatif.

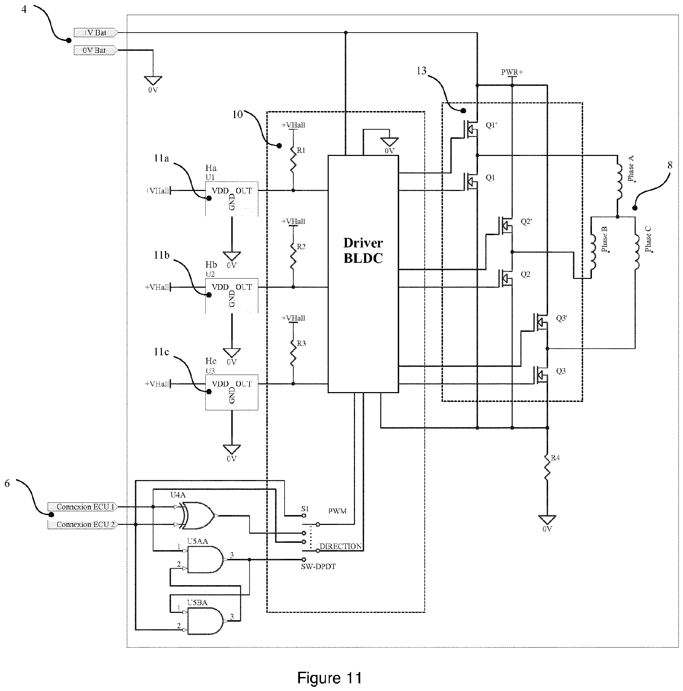

Dans le cas où l'on souhaite disposer d'un seule ensemble mécatronique pouvant s'adapter aux types de signaux fournis par l'ECU, il peut être envisagé d'utiliser un interrupteur ou autres moyens de sélection permettant, dans une position, la liaison directe des signaux lorsque les signaux de l'ECU sont des signaux déjà formatés (sortie type MLI et type binaire « tout ou rien ») ou bien, dans l'autre position, de faire transiter les signaux issu d'un pont de puissance au travers des portes logiques décrites en figures 9a et 9b afin de formater les signaux et donner un signal MLI pour l'information de couple et de type binaire « tout ou rien » pour l'information de direction. Ce mode de réalisation adaptatif est ainsi présenté en figure 11.

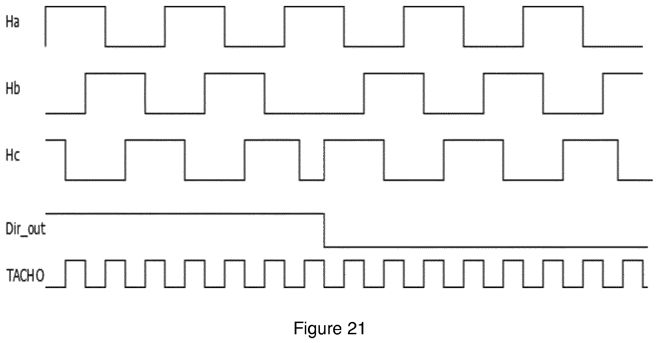

Dans le cas d'une application avec un contrôle de la vitesse moteur (8) par l'ECU (1), il est possible d'intégrer dans le circuit électronique de pilotage (10) un moyen de mesure de la vitesse et/ou un moyen de détection de la direction de rotation du moteur (8). De tels moyens peuvent être réalisés comme indiqué en figure 20. Le détail des signaux générés (« TACHO » + « Dir_Out ») est détaillé en figure 21. Le signal «TACHO» et/ou le signal « Dir_Out » est connecté à l'ECU (1) qui calcule la vitesse du moteur en mesurant la fréquence du signal « TACHO ». Le signal « Dir_Out » indique optionnellement la direction de la rotation du moteur (8) qui peut être différente de la direction de consigne demandée par le signal de couple et de direction (6).

Le moyen de détection de la direction de rotation du moteur (8) peut être réalisé simplement d'une façon identique à la discrimination de sens faite sur un signal en quadrature bien connu des personnes du métier.

## Revendications

1. Ensemble mécatronique (2) pour l'entrainement d'un organe destiné à être relié d'une part à une source électrique continue de puissance (4) et d'autre part à une unité de commande ECU (1) comprenant un calculateur pour l'exécution d'un algorithme d'asservissement délivrant une information (6) de direction et de couple, ledit ensemble (2) comprenant un actionneur formé par un moteur électrique sans balai (8) polyphasé à N phases (où N > 1), des sondes (11) de détection binaires de la position du rotor dudit moteur (8), un circuit électronique comprenant un pont de puissance (13) pour l'alimentation des N phases du moteur (8),
**caractérisé en ce que**
il comporte en outre un circuit électronique de pilotage embarqué (10) exempt de microcontrôleur, calculateur et de mémoire dont l'entrée reçoit ladite information de direction et de couple (6) de l'ECU et dont la sortie commande ledit pont de puissance (13) assurant l'auto-commutation du moteur (8) en combinant les informations en provenance du signal de direction et de couple (6), des sondes (11) de détection binaires de la position du rotor et d'une logique de commutation (14) modulant directement le courant de la source électrique continue de puissance (4) appliquée à chacune desdites phases du moteur (8) et **en ce que** l'information de couple et de direction (6) fournie par l'ECU (1) est distincte du signal de puissance délivré seulement par la source de puissance (4).

2. Ensemble mécatronique selon la revendication 1 **caractérisé en ce qu'**il comporte des moyens combinant le signal de direction et le signal de couple (6) indissociés et directement appliqués à la commande des transistors du pont de puissance (13).

3. Ensemble mécatronique selon la revendication 2 **caractérisé en ce que** l'information de direction et de couple (6) de l'ECU est un signal de type « modulation de largeur d'impulsion » (MLI).

4. Ensemble mécatronique selon les revendications 2 et 3 **caractérisé en ce que** la polarité du courant injecté au moteur (8) définisse la direction de rotation et est dépendante du rapport cyclique du signal MLI.

5. Ensemble mécatronique selon la revendication 4 **caractérisé en ce que** le couple moteur est une fonction dépendante du rapport cyclique (D) du signal MLI selon la formule : Couple = f(D - 0.5).

6. Ensemble mécatronique selon la revendication 1 **caractérisé en ce qu'**il comporte des moyens pour extraire un premier signal de direction et un second signal de couple à partir de ladite information (6) de direction et de couple délivrée par l'ECU.

7. Ensemble mécatronique selon la revendication 6 **caractérisé en ce que** ladite information de direction et de couple délivrée par l'ECU est sous forme d'un signal de type « modulation de largeur d'impulsion » (MLI).

8. Ensemble mécatronique selon la revendication 6 ou 7 **caractérisé en ce que** ledit moyen d'extraction dudit premier signal de direction et dudit second signal de couple délivre un premier état de direction lorsque la largeur d'impulsion sur une période est inférieure à une valeur-seuil (50%), et un deuxième état de direction lorsque la largeur d'impulsion sur une période est supérieure ou égale à ladite valeur-seuil.

9. Ensemble mécatronique selon la revendication 6, 7 ou 8 **caractérisé en ce que** ledit moyen d'extraction dudit premier signal de direction et dudit second signal de couple délivre un signal de couple fonction de l'écart en valeur absolue entre une valeur de référence et le rapport cyclique de ladite information délivrée par l'ECU.

10. Ensemble mécatronique selon les revendications 8 et 9 **caractérisé en ce que** ladite valeur-seuil est égale à ladite valeur de référence.

11. Ensemble mécatronique selon la revendication 9 **caractérisé en ce que** ladite valeur-seuil et ladite valeur de référence sont 0,5.

12. Ensemble mécatronique selon la revendication 1 ou 6 **caractérisé en ce qu'**il comporte des moyens pour extraire un premier signal de direction et un second signal de couple à partir de ladite information de direction et de couple délivrée par l'ECU sous forme d'une première information de direction et d'une seconde information de couple, lesdites informations étant appliquées à un ensemble de portes logiques constituant ledit moyen d'extraction.

13. Ensemble mécatronique selon la revendication 1 ou 6 **caractérisé en ce qu'**il comporte des moyens pour extraire un premier signal de direction et un second signal de couple à partir de ladite information de direction et de couple délivrée par l'ECU sous forme d'un signal issu d'un pont H de puissance, lesdites informations étant appliquées à un ensemble de portes logiques constituant ledit moyen d'extraction.

14. Ensemble mécatronique selon les revendications 1 à 12 **caractérisé en ce qu'**il comporte des moyens d'information bidirectionnelle signalant un défaut dudit ensemble mécatronique à l'ECU sous forme d'une information forçant le signal de type « modulation de largeur d'impulsion » à zéro.

15. Ensemble mécatronique selon la revendication 14 **caractérisé en ce que** les moyens d'information bidirectionnelle permettent d'acquitter ledit défaut après prise en compte par l'ECU en envoyant une information de retour en fonctionnement normal à l'ensemble mécatronique.

16. Ensemble mécatronique selon la revendication 1 **caractérisé en ce que** c'est un ensemble mécatronique automobile et **en ce que** la batterie est une batterie de l'automobile

17. Ensemble mécatronique selon la revendication 1 **caractérisé en ce que** le circuit électronique de pilotage (10) intègre un moyen de mesure la vitesse du moteur (8).

18. Ensemble mécatronique selon la revendication 1 **caractérisé en ce que** le circuit électronique de pilotage (10) intègre un moyen de mesure de la direction réelle de rotation du moteur (8).

19. Ensemble mécatronique selon les revendications 1, 17 et/ou 18 **caractérisé en ce que** les informations de vitesse et /ou de direction sont retournées à l'ECU (1)

20. Ensemble mécatronique selon les revendications 1 et 19 **caractérisé en ce que** l'ECU utilise les informations de vitesse (« TACHO ») et/ou de direction (« Dir_Out ») pour une régulation de la vitesse du moteur (8) du système mécatronique (2).

21. Ensemble mécatronique selon les revendications 1 et 19 **caractérisé en ce que** l'ECU utilise les informations de vitesse (« TACHO ») et/ou de direction (« Dir_Out ») pour un contrôle de la vitesse du moteur (8) du système mécatronique (2).

22. Ensemble mécatronique selon les revendications 1 et 19 **caractérisé en ce que** l'ECU utilise les informations de vitesse (« TACHO ») et/ou de direction (« Dir_Out ») pour un diagnostic du système mécatronique (2).

23. Ensemble mécatronique selon l'une des revendications 16 à 22 **caractérisé en ce que** ledit moteur (8) est destiné au réglage de la phase d'un arbre à cames relativement à l'arbre moteur.

24. Ensemble mécatronique selon l'une des revendications 16 à 22 **caractérisé en ce que** ledit moteur (8) est destiné au réglage d'une vanne de recirculation de gaz brulés.

25. Ensemble mécatronique selon l'une des revendications 16 à 22 **caractérisé en ce que** ledit moteur (8) est destiné au réglage d'un turbo à géométrie variable.

## Patentansprüche

1. Mechatronische Baugruppe (2) zum Antrieb eines Elements, die zum Anschluss einerseits an eine Gleichstromquelle (4) und andererseits an eine ECU-Steuereinheit (1) bestimmt ist, umfassend einen Rechner zur Ausführung eines Servosteuerungsalgorithmus, der Richtungs- und Drehmomentinformationen (6) liefert, wobei die Baugruppe (2) einen Aktuator, der aus einem mehrphasigen bürstenlosen Elektromotor (8) mit N Phasen (wobei N > 1) besteht, binäre Sonden (11) zur binären Erfassung der Position des Rotors des Motors (8), eine elektronische Schaltung mit einer Leistungsbrücke (13) zur Versorgung der N Phasen des Motors (8) umfasst, **dadurch gekennzeichnet, dass** sie außerdem Folgendes umfasst: eine elektronische On-Board-Steuerschaltung (10) ohne Mikrocontroller, Rechner und Speicher, dessen Eingang die Richtungs- und Drehmomentinformationen (6) von der ECU empfängt und dessen Ausgang die Leistungsbrücke (13) steuert, die die Selbstumschaltung des Motors (8) durch Kombination der Informationen des Richtungs- und Drehmomentsignals (6), der binären Rotorstellungs-Erfassungssonden (11) und der Schaltlogik (14) sicherstellt, die den Strom aus der Gleichstromquelle (4) direkt modulieren, der an jede der Phasen des Motors (8) angelegt wird, und dadurch, dass die von der ECU (1) gelieferte Drehmoment- und Richtungsinformationen (6) von dem nur von der Stromquelle (4) gelieferten Leistungssignal verschieden ist.

2. Mechatronische Baugruppe nach Anspruch 1, **dadurch gekennzeichnet, dass** sie Mittel zur Kombination des Richtungssignals und des Drehmomentsignals (6) umfasst, die untrennbar sind und direkt an die Steuerung der Transistoren der Leistungsbrücke (13) angelegt werden.

3. Mechatronische Baugruppe nach Anspruch 2, **dadurch gekennzeichnet, dass** die Richtungs- und Drehmomentinformationen (6) der ECU ein Signal vom Pulsweitenmodulationstyp (PWM) sind.

4. Mechatronische Baugruppe nach Anspruch 2 und 3, **dadurch gekennzeichnet, dass** die Polarität des in den Motor (8) eingespeisten Stroms die Drehrichtung definiert und vom Tastverhältnis des PWM-Signals abhängig ist.

5. Mechatronische Baugruppe nach Anspruch 4, **dadurch gekennzeichnet, dass** das Motordrehmoment eine Funktion ist, die vom Tastverhältnis (D) des PWM-Signals gemäß der folgenden Formel abhängt:$Drehmoment=f \left(D-0,5\right) .$

6. Mechatronische Baugruppe nach Anspruch 1, **dadurch gekennzeichnet, dass** sie Mittel zum Extrahieren eines ersten Richtungssignals und eines zweiten Drehmomentsignals aus den von der ECU gelieferten Richtungs- und Drehmomentinformationen (6) umfasst.

7. Mechatronische Baugruppe nach Anspruch 6, **dadurch gekennzeichnet, dass** die von der ECU gelieferte Richtungs- und Drehmomentinformationen in Form eines Signals vom Pulsweitenmodulationstyp (PWM) vorliegen.

8. Mechatronische Baugruppe nach Anspruch 6 oder 7, **dadurch gekennzeichnet, dass** die Mittel zum Extrahieren des ersten Richtungssignals und des zweiten Drehmomentsignals einen ersten Richtungszustand liefern, wenn die Pulsweite über eine Periode kleiner als ein Schwellenwert (50%) ist, und einen zweiten Richtungszustand, wenn die Pulsweite über eine Periode größer oder gleich dem Schwellenwert ist.

9. Mechatronische Baugruppe nach Anspruch 6, 7 oder 8, **dadurch gekennzeichnet, dass** die Mittel zum Extrahieren des ersten Richtungssignals und des zweiten Drehmomentsignals ein Drehmomentsignal liefern, das eine Funktion der Abweichung des Absolutwerts zwischen einem Referenzwert und dem zyklischen Verhältnis der von der ECU gelieferten Information ist.

10. Mechatronische Baugruppe nach Anspruch 8 und 9, **dadurch gekennzeichnet, dass** der Schwellenwert gleich dem Referenzwert ist.

11. Mechatronische Baugruppe nach Anspruch 9, **dadurch gekennzeichnet, dass** der Schwellenwert und der Referenzwert 0,5 betragen.

12. Mechatronische Baugruppe nach Anspruch 1 oder 6, **dadurch gekennzeichnet, dass** sie Mittel zum Extrahieren eines ersten Richtungssignals und eines zweiten Drehmomentsignals aus den von der ECU gelieferten Richtungs- und Drehmomentinformationen in Form einer ersten Richtungsinformation und einer zweiten Drehmomentinformation umfasst, wobei die Informationen an eine Gruppe von Logik-Gattern angelegt werden, die die Extraktionsmittel bilden.

13. Mechatronische Baugruppe nach Anspruch 1 oder 6, **dadurch gekennzeichnet, dass** sie Mittel zum Extrahieren eines ersten Richtungssignals und eines zweiten Drehmomentsignals aus den Richtungs- und Drehmomentinformationen umfasst, die von der ECU in Form eines Signals einer H-Leistungsbrücke geliefert werden, wobei die Informationen an eine Gruppe von Logik-Gattern angelegt werden, die die Extraktionsmittel bilden.

14. Mechatronische Baugruppe nach den Ansprüchen 1 bis 12, **dadurch gekennzeichnet, dass** sie bidirektionale Informationsmittel umfasst, die der ECU einen Fehler in der mechatronischen Baugruppe in Form einer Information signalisieren, die das Signal vom Pulsweitenmodulationstyp auf Null zwingt.

15. Mechatronische Baugruppe nach Anspruch 14, **dadurch gekennzeichnet, dass** die bidirektionalen Informationsmittel es ermöglichen, den Fehler nach seiner Berücksichtigung durch die ECU durch Senden von Rückkopplungsinformationen im Normalbetrieb an die mechatronische Baugruppe zu bestätigen.

16. Mechatronische Baugruppe nach Anspruch 1, **dadurch gekennzeichnet, dass** es sich um eine mechatronische Kraftfahrzeug-Baugruppe handelt und dass die Batterie eine Kraftfahrzeug-Batterie ist.

17. Mechatronische Baugruppe nach Anspruch 1, **dadurch gekennzeichnet, dass** die elektronische Steuerschaltung (10) ein Mittel zur Messung der Geschwindigkeit des Motors (8) umfasst.

18. Mechatronische Baugruppe nach Anspruch 1, **dadurch gekennzeichnet, dass** die elektronische Steuerschaltung (10) ein Mittel zur Messung der tatsächlichen Drehrichtung des Motors (8) umfasst.

19. Mechatronische Baugruppe nach den Ansprüchen 1, 17 und/oder 18, **dadurch gekennzeichnet, dass** die Geschwindigkeits- und/oder Richtungsinformationen an die ECU (1) zurückgegeben werden.

20. Mechatronische Baugruppe nach Anspruch 1 und 19, **dadurch gekennzeichnet, dass** die ECU die Drehzahl- ("TACHO") und/oder Richtungsinformationen ("Dir_Out") für eine Drehzahlregelung des Motors (8) des mechatronischen Systems (2) verwendet.

21. Mechatronische Baugruppe nach Anspruch 1 und 19, **dadurch gekennzeichnet, dass** die ECU die Drehzahl- ("TACHO") und/oder Richtungsinformationen ("Dir_Out") zur Steuerung der Drehzahl des Motors (8) des mechatronischen Systems (2) verwendet.

22. Mechatronische Baugruppe nach Anspruch 1 und 19, **dadurch gekennzeichnet, dass** die ECU die Geschwindigkeits- ("TACHO") und/oder Richtungsinformationen ("Dir_Out") für eine Diagnose des mechatronischen Systems (2) verwendet.

23. Mechatronische Baugruppe nach einem der Ansprüche 16 bis 22, **dadurch gekennzeichnet, dass** der Motor (8) dazu bestimmt ist, die Phase einer Nockenwelle relativ zur Motorwelle einzustellen.

24. Mechatronische Baugruppe nach einem der Ansprüche 16 bis 22, **dadurch gekennzeichnet, dass** der Motor (8) zur Einstellung eines Zirkulationsventils für Verbrennungsgase bestimmt ist.

25. Mechatronische Baugruppe nach einem der Ansprüche 16 bis 22, **dadurch gekennzeichnet, dass** der Motor (8) für die Einstellung eines Turbos mit variabler Geometrie bestimmt ist.

## Claims

1. Mechatronic assembly (2) for driving a component intended to be connected to both a continuous electrical power source (4) and an ECU control unit (1) comprising a computer for executing a servo-control algorithm which produces direction and torque information (6), said assembly (2) comprising an actuator formed by an N-phase (where N > 1) polyphase brushless electric motor (8), binary sensors (11) for detecting the position of the rotor of said motor (8), an electronic circuit comprising a power bridge (13) for supplying the N phases of the motor (8), **characterized in that** said assembly additionally comprises an on-board electronic driver circuit (10) without a microcontroller, computer or memory, the input of which circuit receives said direction and torque information (6) from the ECU and the output of which circuit controls said power bridge (13), thereby ensuring self-commutation of the motor (8), by combining the information from the direction and torque signal (6), from the binary sensors (11) for detecting the position of the rotor and from a commutation logic (14) which directly modulates the current of the continuous electrical power source (4) applied to each of said phases of the motor (8), and **in that** the torque and direction information (6) provided by the ECU (1) is separate from the power signal produced only by the power source (4).

2. Mechatronic assembly according to claim 1, **characterized in that** it includes means which combine the direction signal and the torque signal (6) so as to be indissociated and directly applied to the control of the transistors of the power bridge (13).

3. Mechatronic assembly according to claim 2, **characterized in that** the direction and torque information (6) from the ECU is a "pulse width modulation" (PWM) signal.

4. Mechatronic assembly according to claims 2 and 3, **characterized in that** the polarity of the current fed to the motor (8) defines the direction of rotation and is dependent on the duty cycle of the PWM signal.

5. Mechatronic assembly according to claim 4, **characterized in that** the motor torque is a function dependent on the duty cycle (D) of the PWM signal according to the formula:
torque = f(D - 0.5).

6. Mechatronic assembly according to claim 1, **characterized in that** it includes means for extracting a first direction signal and a second torque signal from said direction and torque information (6) produced by the ECU.

7. Mechatronic assembly according to claim 6, **characterized in that** said direction and torque information produced by the ECU is in the form of a "pulse width modulation" (PWM) signal.

8. Mechatronic assembly according to either claim 6 or claim 7, **characterized in that** said means for extracting said first direction signal and said second torque signal produces a first direction state when the pulse width over a period is less than a threshold value (50%), and a second direction state when the pulse width over a period is greater than or equal to said threshold value.

9. Mechatronic assembly according to either claim 6, claim 7 or claim 8, **characterized in that** said means for extracting said first direction signal and said second torque signal produces a torque signal on the basis of the difference in absolute value between a reference value and the duty cycle of said information produced by the ECU.

10. Mechatronic assembly according to claims 8 and 9, **characterized in that** said threshold value is equal to said reference value.

11. Mechatronic assembly according to claim 9, **characterized in that** said threshold value and said reference value are 0.5.

12. Mechatronic assembly according to either claim 1 or claim 6, **characterized in that** it includes means for extracting a first direction signal and a second torque signal from said direction and torque information produced by the ECU in the form of first direction information and second torque information, said information being applied to a set of logic gates constituting said extraction means.

13. Mechatronic assembly according to either claim 1 or claim 6, **characterized in that** it includes means for extracting a first direction signal and a second torque signal from said direction and torque information produced by the ECU in the form of a signal from an H-bridge, said information being applied to a set of logic gates constituting said extraction means.

14. Mechatronic assembly according to claims 1 to 12, **characterized in that** it comprises bidirectional information means which report a fault of said mechatronic assembly to the ECU in the form of information which forces the "pulse width modulation" signal to zero.

15. Mechatronic assembly according to claim 14, **characterized in that** the bidirectional information means make it possible to acknowledge said fault after it has been taken into account by the ECU by sending return information in normal operation to the mechatronic assembly.

16. Mechatronic assembly according to claim 1, **characterized in that** it is an automotive mechatronic assembly and **in that** the battery is an automotive battery.

17. Mechatronic assembly according to claim 1, **characterized in that** the electronic driver circuit (10) contains a means for measuring the speed of the motor (8).

18. Mechatronic assembly according to claim 1, **characterized in that** the electronic driver circuit (10) contains a means for measuring the actual direction of rotation of the motor (8).

19. Mechatronic assembly according to claims 1, 17 and/or 18, **characterized in that** the speed and/or direction information is returned to the ECU (1).

20. Mechatronic assembly according to claims 1 and 19, **characterized in that** the ECU uses the speed ("TACHO") and/or direction ("Dir_Out") information for closed-loop control of the speed of the engine (8) of the mechatronic system (2).

21. Mechatronic assembly according to claims 1 and 19, **characterized in that** the ECU uses the speed ("TACHO") and/or direction ("Dir_Out") information for open-loop control of the speed of the engine (8) of the mechatronic system (2).

22. Mechatronic assembly according to claims 1 and 19, **characterized in that** the ECU uses the speed ("TACHO") and/or direction ("Dir_Out") information for diagnosis of the mechatronic system (2).

23. Mechatronic assembly according to any of claims 16 to 22, **characterized in that** said motor (8) is intended for adjusting the phase of a camshaft relative to the motor shaft.

24. Mechatronic assembly according to any of claims 16 to 22, **characterized in that** said motor (8) is intended for adjusting a waste gas recirculation valve.

25. Mechatronic assembly according to any of claims 16 to 22, **characterized in that** said motor (8) is intended for adjusting a variable-geometry turbo.
